# EUROPÄISCHE PATENTSCHRIFT

(11) **EP 0 795 468 B1**
(45) Veröffentlichungstag und Bekanntmachung des Hinweises auf die Patenterteilung: **27.11.2002**
(21) Anmeldenummer: 97102375.9
(22) Anmeldetag: 14.02.1997
(51) Int. Cl.: B64D 11/00, B60Q 3/02

(54) **Beleuchtungssystem in Passagierkabinen, insbesondere für Passagierflugzeuge**
Lightning system for passenger compartment, specially for an aircraft
Système d'éclairage pour une cabine de passagers, spécialement une cabine d'avion

(30) Priorität: 15.03.1996 DE 19610147
(43) Veröffentlichungstag der Anmeldung: 17.09.1997
(73) Patentinhaber: Airbus Deutschland GmbH, 21129 Hamburg (DE)
(72) Erfinder: Schumacher, Markus, 21614 Buxtehude (DE); Muin, Andrew, 21614 Buxtehude (DE); Lau, Michael, 21739 Dollern (DE)
(74) Vertreter: Hansmann, Dierk, Dipl.-Ing.

(56) Entgegenhaltungen:
- DE-A- 3 729 554
- US-A- 5 219 217
- US-A- 5 483 427
- PATENT ABSTRACTS OF JAPAN vol. 095, no. 001, 28. Februar 1995 & JP 06 298003 A (MITSUBISHI RAYON CO LTD), 25. Oktober 1994
- PATENT ABSTRACTS OF JAPAN vol. 8, no. 96 (M-294) [1533], 4. Mai 1984 & JP 59 011934 A (NISSAN JIDOSHA K.K.), 21. Januar 1984

## Beschreibung

Die Erfindung betrifft ein Beleuchtungssystem in Passagierkabinen, insbesondere für Passagierflugzeuge, wobei ausgehend von mindestens einer zentralen Lichtquelle Lichtverteilleitungen in der Passagierkabine angeordnet sind und die Lichtverteilleitungen aus mit Längs-Prismen versehenen Hohlleitern - genannt Lichtrohre - bestehen.

Bei allgemein bekannten Beleuchtungssystemen in Passagierkabinen von Flugzeugen werden für die einzelnen Beleuchtungsbereiche eine Vielzahl unterschiedlicher Leuchtmittel eingesetzt. Für die Allgemeinbeleuchtung werden Leuchtstoffröhren verwendet, die oberhalb der Gepäckablagen angeordnet sind und als indirekte Beleuchtung Kassettendecken im Deckenbereich des Flugzeuges ausleuchten. Bekannt sind auch Leuchtstoffröhren insbesondere im Eingangsbereich eines Flugzeuges, die direkt im Deckenbereich angeordnet und mit einer Abdeckung versehen sind. Für eine sitzzugeordnete Beleuchtung sind Leselampen je Sitzeinheit vorgesehen, die normalerweise unterhalb einer Gepäckablage in einer Passagierversorgungseinheit je Sitzgruppe angeordnet sind. Für die meisten Leuchtmittel sind aufgrund ihres konstruktiven Aufbaus zusätzliche Einheiten notwendig, wie beispielsweise Trafos oder Vorschaltgeräte, die sich bei der Vielzahl der in der Flugzeugkabine notwendigen Leuchtmittel zu einem recht hohen Gewichtsanteil summieren. Darüber hinaus ist der notwendige Wartungs- und Reparaturaufwand hoch, der durch den Austausch einzelner defekter Leuchteinheiten oder mit ihnen verbundener Komponenten verursacht wird.

Aus US 5,219,217 die auch die Merkmale des Oberbegriffs des 1. Anspruchs beinhaltet, ist ein Beleuchtungssystem zur Beleuchtung von Hinweiszeichen oder Anzeigeschildern in Verkehrsmitteln, wie Omnibussen gezeigt. Es wird Licht ausgehend von einer Lichtquelle in ein langgestrecktes rohrförmiges Element emittiert, wobei das Rohr zumindest abschnittsweise mit einem hochreflektierenden Film (Längsprismen) ausgestattet ist. Weiterhin sind Lichtaustrittsöffnungen in Form eines Schlitzes entlang der Länge des Rohres vorgesehen. Das ausgesendete Licht soll von der reflektierenden Folie (oder Film) durch die Lichtaustrittsöffnungen auf Anzeigeschilder oder Werbeschilder oder ähnliche Objekte geworfen werden. Damit ist eine punktuelle oder auf kleine Flächen bezogenen Beleuchtung innerhalb von Passagierkabinen realisiert.
In US 5,483,427 ist eine Beleuchtung eines Beladeraumes eines Trucks gezeigt, wobei ausgehend von einer zentralen Lichtquelle zu einzelnen Lichtabstrahlungsbereichen jeweils Lichtverteilleitungen verlaufen. Die Lichtverteilleitungen sind vorzugsweise aus faseroptischem Material und jeweils eine Leitung endet an einem Lichtabstrahlbereich und dort erfolgt eine Auskopplung des Lichts. Die Lichtverteilleitungen sind in dieser Lösung nicht dazu geeignet, eine gleichmäßige Abstrahlung in eine Kabine und damit eine Allgemeinbeleuchtung zu realisieren.
Aus JP 6298003 ist eine Lichtverteilung ausgehend von einer zentralen Lichtquelle gezeigt, die für eine Sitzplatzbeleuchtung vorgesehen ist. Als Lichtverteilleitungen sind faseroptische Kabel vorgesehen, die - gespeist von der zentralen Lichtquelle - punktuell einem jeweiligen Sitzplatz Licht zur Verfügung stellen.

Der vorliegenden Erfindung liegt die Aufgabe zugrunde, ein gattungsgemäßes Beleuchtungssystem zu schaffen, welches eine Allgemeinbeleuchtung in einer Passagierkabine ermöglicht, wobei über relativ weite Strecken, d.h. beispielsweise über die Längsausdehnung einer Flugzeugpassagierkabine hinweg, eine gleichmäßige Beleuchtung erreicht werden soll sowie ein minimales Systemgewicht und eine hohe Wartungsfreundlichkeit des Beleuchtungssystems zu gewährleisten ist.

Diese Aufgabe wird mit den in Patentanspruch 1 angegebenen Maßnahmen gelöst.

Dabei ist insbesondere von Vorteil, dass für die einzelnen Beleuchtungsbereiche innerhalb einer Passagierkabine ein einheitliches System gebildet wurde, wobei mit der Konzentration in ein System eine erhebliche Gewichtsreduzierung durch Wegfall von Lichtquellen, Verkabelungen und Vorschaltgeräten erreicht ist. Mit dem Einsatz von Lichtrohranordnungen ist der Wegfall von vielen, innerhalb der gesamten Kabine verteilten Lichtquellen erreicht. Nunmehr ist es möglich, an vorbestimmten, wartungsfreundlichen Orten innerhalb der Passagierkabine Lichtquellen anzuordnen und über die Lichtrohranordnung eine gleichmäßige Kabinenbeleuchtung zu realisieren.

Weiterbildungen und zweckmäßige Ausgestaltungen ergeben sich aus den Unteransprüchen 2 - 19.

Die Ausgestaltungen gemäß der Unteransprüche 2 bis 6 beinhalten vorteilhafte Realisierungsmöglichkeiten einer Kabinenallgemeinbeleuchtung im Deckenbereich.

Die Ausgestaltung gemäß der Unteransprüche 7 und 8 ist geeignet, eine Modulbauweise für eine Lichtrohranordnung zur Verfügung zu stellen, wobei die notwendigen Lichtquellen an leicht zugänglichen Orten mit wenig Verkabelungsaufwand vorgesehen sind.

Gemäß Unteranspruch 9 ist es möglich, ausgehend von einer Lichtrohranordnung eine Lichtauskopplung für bestimmte Bereiche beispielsweise Hinweiszeichen vorzunehmen.

Die Maßnahmen gemäß der Unteransprüche 10 bis 13 zeigen flexible Lichtentnahmemöglichkeiten, die beispielsweise für die Versorgung der Passagiere im Sitz- oder Aufenthaltsbereich mit Leselicht genutzt werden können.

Die vorteilhaften Weiterbildungen der erfindungsgemäßen Lösung entsprechend der Unteransprüche 14 bis 19 zeigen Möglichkeiten für eine flexible, steuerbare Änderung der Lichtverhältnisse für unterschiedliche Kabinenabschnitte oder Beleuchtungsaufgaben innerhalb einer Allgemeinbeleuchtung. Die Erfindung wird nachstehend beschrieben, wobei die Ausbildung des Beleuchtungssysstems anhand der in der Zeichnung dargestellten Ausführungsbeispiele näher erläutert ist. In den Figuren sind gleiche Bauteile mit gleichen Bezugszeichen versehen.

Die Zeichnung zeigt
- in Fig. 1: ein Passagierflugzeug mit einer layoutartigen Übersicht eines Beleuchtungssystems,
- in Fig. 2: der Aufbau eines Lichtrohres, welches für das Beleuchtungssystem Anwendung findet,
- in Fig. 3 bis 6: das Lichtrohr mit unterschiedlichen Ausgestaltungen von Lichtauskopplungseinrichtungen,
- in Fign. 7 und 8: eine Lichtrohranordnung innerhalb der Flugzeugkabine im Bereich von Gepäckablagen,
- in Fign. 9 bis 11: weitere Lichtrohranordnungen innerhalb der Flugzeugkabine im Bereich der Decken,
- in Fign. 12 und 12A: eine weitere Lichtrohranordnung mit einer Verbindung zur Hinweisschildbeleuchtung,
- in Fig. 13: eine Lichtrohranordnung mit einer verschiebbaren Lichtauskopplungseinrichtung,
- in Fig. 14: einen in einem Luftkanal verschiebbaren Lichtgenerator und
- in Fign. 15 und 16: mögliche Ausgestaltungen von Lichtrohranordnungen mit verschiebbaren Lichtgeneratoren.

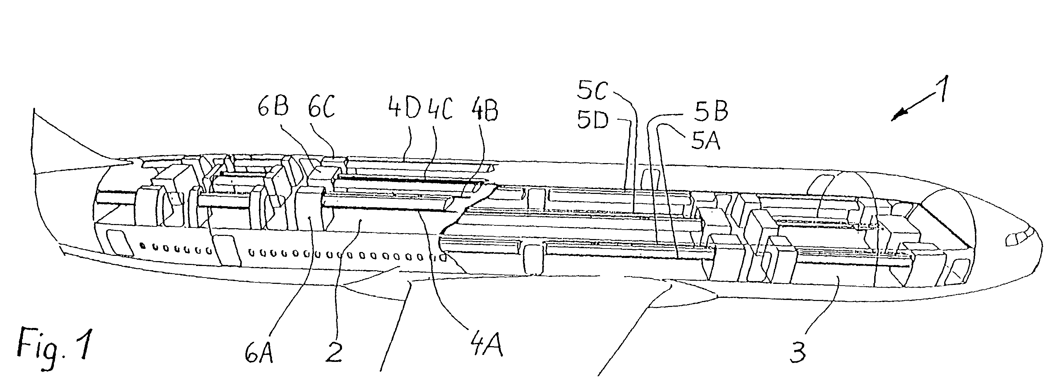

Die Fig. 1 zeigt ein Passagierflugzeug 1, welches ein oberes Deck 2 und ein unteres Deck 3 aufweist. Im oberen und im unteren Deck 2 und 3 sind jeweils Passagierkabinen vorgesehen. Im jeweiligen Passagierdeck 2 oder 3 sind Lichtverteilleitungen 4A, 4B, 4C, 4D oder 5A, 5B, 5C, 5D angeordnet, die sich nahezu entlang der gesamten Kabine erstrecken. Die Lichtverteilleitungen 4A, 4B, 4C, 4D und 5A, 5B, 5C, 5D sind vorzugsweise als Lichthohlleiter ausgebildet, die von einer fernen Lichtquelle gespeist werden. Die Lichtquellen können vorzugsweise in vorhandene Einbauten im Flugzeug, beispielsweise Bordküchen oder Trennwände, eingebracht werden. In der Fig. 1 sind beispielhaft die Festeinbauten mit Bezugszeichen 6A, 6B, 6C gekennzeichnet. Die Lichtquellen speisen am Ende der Lichthohlleiter das Licht ein, wobei das eingeleitete Licht durch den Röhrenhohlraum weitergeleitet wird. Ein Teil des Lichts wird innerhalb des Lichthohlleiters reflektiert und ein weiterer Teil des Lichts kann aus dem Hohlleiter austreten. Das austretende Licht stellt dann die Kabinenbeleuchtung dar.

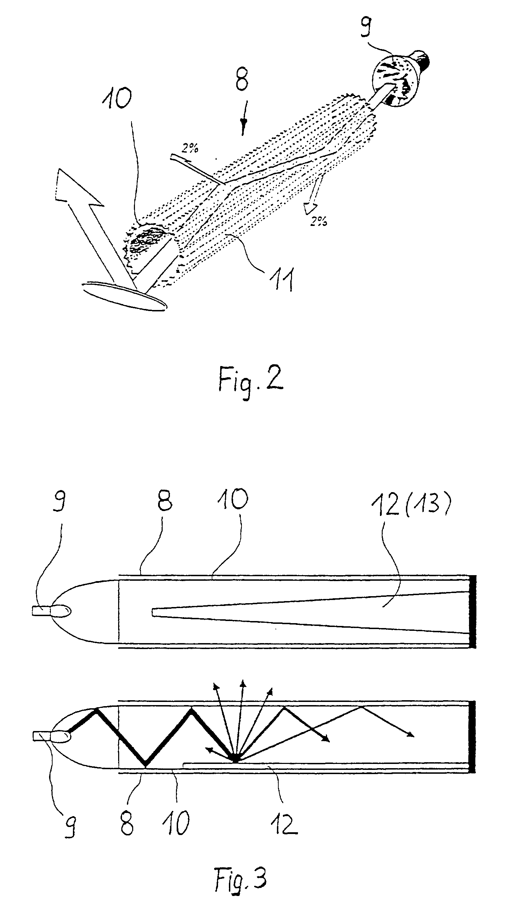

In Fig. 2 ist eine mögliche Ausführung eines Lichthohlleiters, im weiteren auch Lichtrohr 8 bezeichnet, ersichtlich. Das Lichtrohr 8 kann aus Glas oder klarem Kunststoff bestehen. Von einer Lichtquelle 9, die an einem Ende des Lichtrohres 8 angeordnet ist, wird das Licht in das Rohrinnere abgestrahlt. Das Innere des Rohres 8 ist mit einer Prismenfolie (OLF = Optical Lighting Film) 10 ausgekleidet, die auftreffendes Licht ins Rohrinnere zurückreflektiert. Die Prismenfolie 10 ist mit ihrer glatten Seite nach innen und mit längsverlaufenden äußeren Rillen 11 in das Rohr 8 eingerollt. Denkbar ist auch eine einteilige Ausführung des Lichtrohres 8, wobei das Lichtrohr selbst eine prismenartige Oberfläche aufweist. Während der größere Anteil des Lichts (ca. 98 % bezogen auf eine begrenzte Rohrlänge) im Inneren des Lichtrohres 8 entlanggeführt wird, wird ein kleinerer Anteil (ca. 2%), bedingt durch seinen Auftrittswinkel auf die Wandung des Rohres, nicht zurückreflektiert und tritt durch die Rohrwandung als "Kabinenlicht" aus. Mit einem solchen Lichtrohr ist eine Allgemeinbeleuchtung innerhalb der Kabine erreichbar. Für die Anwendung in Flugzeugkabinen sind Lichtrohrdurchmesser und Lichtquellenleistung so zu bemessen, daß nicht nur das Lichtrohr selbst, sondern die Flugzeugkabine 2 oder 3 gleichmäßig hell beleuchtet werden. Der Lichthohlleiter ist dabei mindestens von einem Kabineneinbau zu einem weiteren Kabineneinbau zu führen, um zusammenhängende Kabinenabschnitte unterbrechungsfrei zu beleuchten. Bei kleineren Flugzeugen mit nur einem Längsgang ist im Hinblick auf das Kabinenlayout eine einzige, über die Gesamtlänge verlaufende Lichtrohranordnung vorteilhaft. Dazu kann vorteilhaft auch beidseitig in die Lichtrohre Lichtenergie eingespeist werden, um längere Stecken mit ausreichend Licht zu versorgen.
Für den beschriebenen Lichtrohraufbau mit längsverlaufenden Prismenfolien 10 sind Möglichkeiten zur Erhöhung der Lichtauskopplung vorgesehen. Eine gezielte Lichtauskopplung ist sinnvollerweise an Stellen mit erhöhtem Lichtbedarf, beispielsweise bei Hinweisschildern, Treppen zwischen den Decks, Türen o.ä. anzuordnen. Aufgrund von Lichtauskopplungsmaßnahmen kann es im Interesse von gleichmäßigen Lichtverhältnissen notwendig sein, dann die Lichtquellen in erheblich kürzeren Abständen zu setzen.

In den Fign. 3 bis 6 sind unterschiedliche Methoden der Lichtauskopplung gezeigt.
In Fig. 3 ist das Lichtrohr 8, welches mit der oben beschriebenen OLF-Prismenfolie 10 ausgekleidet ist, mit einem Extraktor 12 versehen. Der Extraktor 12 besteht aus einer weiß-diffus streuenden Folie 13 von hohem Reflexionsgrad. Die Reflexionsfolie 13 bewirkt, daß ein Teil des durch das Rohr 8 geleiteten Lichts in Richtungen gestreut wird, für die der Einfallswinkel auf der Rohrwand unterhalb des Grenzwinkels der Totalreflexion liegt. Für diese Richtungen ist der Prismenfilm 10 lichtdurchlässig. Das Licht von einer Lichtquelle 9 kann nach Reflexion am Extraktor 12 aus der Mantelfläche des Lichtrohres 8 in alle Richtungen austreten. Für eine gleichmäßige Lichtauskopplung über die Lichtrohrlänge nimmt die Breite des Extraktors 12 mit dem Abstand von der Lichtquelle 9 zu, um die Abnahme des zum Auskoppeln verfügbaren Lichts auszugleichen. In Nähe der Lichtquelle 9 gleicht der Extraktor 12 einer Spitze.

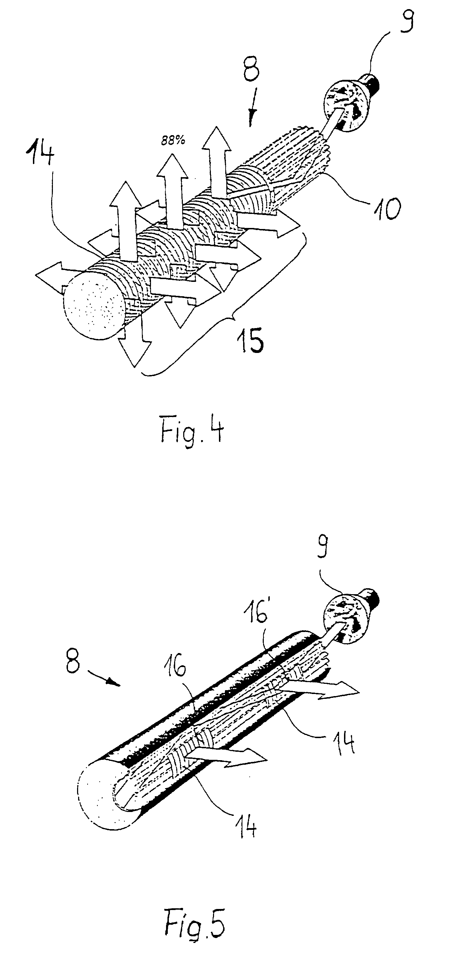

Die Fig. 4 zeigt eine Möglichkeit der Lichtauskopplung, mit der effizient an ausgewählten Stellen Licht das Lichtrohr 8 verlassen kann. Statt der längsverlaufenden Prismenfolie 10 wird in einem vorbestimmten Ringbereich 15 des Lichtrohres 8 radial verlaufende Prismenfolie 14 - bekannt als Transmission Right Angle Film (TRAF) - eingebracht. In diesem Bereich kann das Licht dann rechtwinklig zur Längsachse des Lichtrohres 8 austreten.

In Fig. 5 ist ein Lichtrohr 8 ersichtlich, an dem radial verlaufende Prismenfolie (TRAF) 14 an vorbestimmten Lichtaustrittsöffnungen 16 und 16' vorgesehen ist. Diese "Fenster" 16 und 16' ermöglichen, das bestimmte Kabinenbereiche angestrahlt werden.

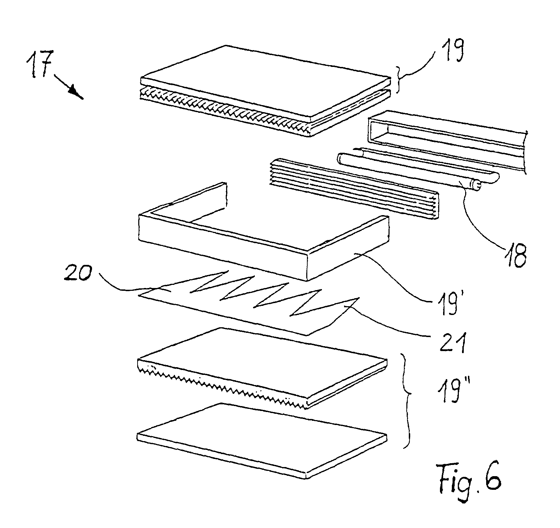

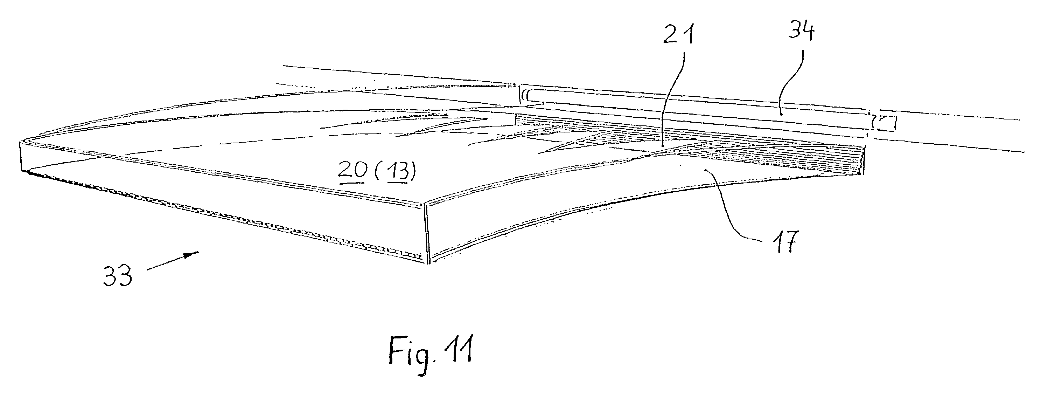

Eine weitere Variante der Lichtauskopplung ist in Fig. 6 gezeigt. Hierbei handelt es sich um einen Lichtkasten 17, bei dem nicht eine Punktlichtquelle, sondern eine stabförmige Lichtquelle 18 Verwendung findet. Der Lichtkasten 17 ist in einer Explosionsdarstellung gezeigt. Ein lichtdurchlässiges Gehäuse 19 bildet den Lichtkasten 17. Nebeneinander angeordnete Einzelextraktoren 20, deren Spitzen 21 zur Lichtquelle 18 zeigen, ermöglichen in Verbindung mit der stabförmigen Lichtquelle 18 eine gleichmäßige Beleuchtung des gesamten Lichtkastens 17. Eine Anwendung eines solchen Lichtkastens 17 als Deckenbeleuchtungsteil ist näher in der Figur 11 dargestellt. Als weitere Anwendungsmöglichkeiten wären die Beleuchtung von Werbetafeln oder Seitenverkleidungsteilen zu nennen.

Mögliche Ausgestaltungen von Lichtrohranordnungen in einer Flugzeugkabine sind in den nachfolgenden Fign. ersichtlich.

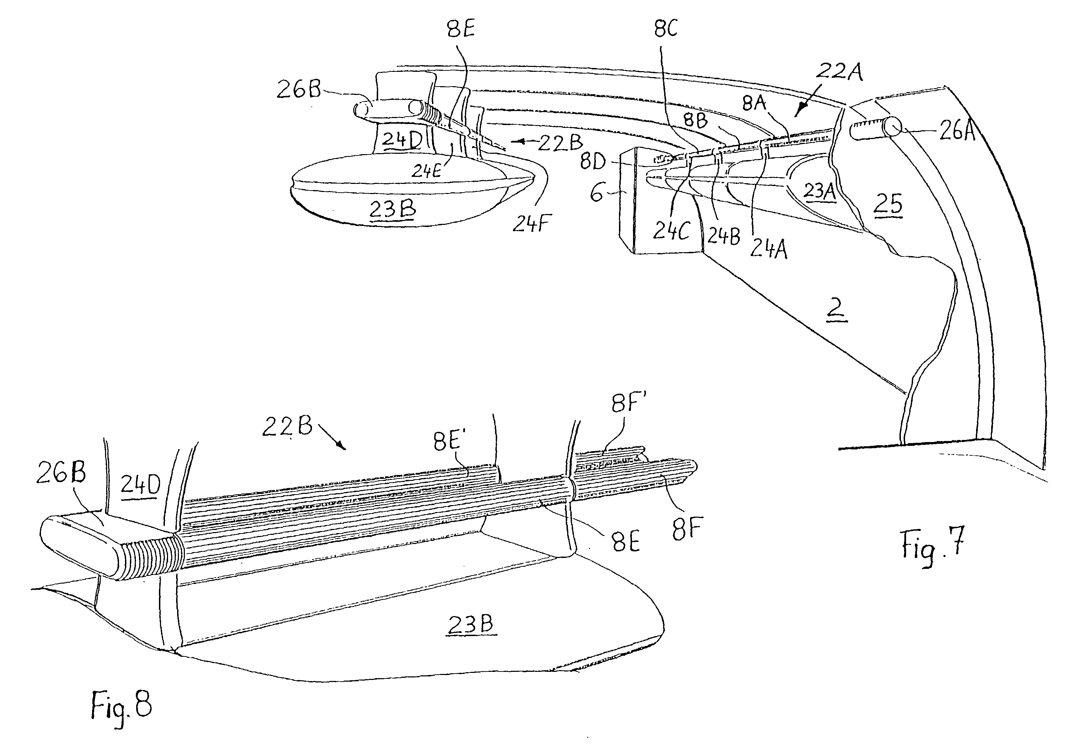

In der Fig. 7 ist ein Ausschnitt einer perspektivisch dargestellten Passagierkabine 2 gezeigt. In dieser Ausgestaltung ist eine Lichtrohranordnung 22A ersichtlich, die an den seitlichen Gepäckablagen 23A innerhalb der Passagierkabine 2 angeordnet ist. Eine weitere Lichtrohranordnung 22B ist an Mittelgepäckablagen 23B vorgesehen. Die Lichtrohranordnung 22A ist im wesentlichen aus den Lichtrohren 8A bis 8D und die Lichtrohranordnung 22B aus den Lichtrohren 8E bis 8G gebildet. Eine Befestigung der einzelnen Lichtrohre erfolgt in der gezeigten Ausführung beispielsweise mittels einer Klauenhalterung (nicht dargestellt) an Befestigungsstreben 24A bis 24F, die zum Halten der Seiten- oder Mittelgepäckablagen 23A und 23B vorgesehen sind.

Die Lichtrohranordnung 22A endet einerseits in einem Festeinbau 6 der Passagierkabine 2 und andererseits in einer Trennwand 25. Die mittlere Lichtrohranordnung 22B ist unabhängig von Festeinbauten in der Kabine 2 an den Befestigungsstreben 24D, 24E, 24F der Mittelgepäckablage 23B anzuordnen. An den Enden der Lichtrohranordnung 22A bzw. 22B sind Lichtgeneratoren 26A bzw. 26B zur Einspeisung des Lichts vorgesehen. Die Einspeisung des Lichts kann von beiden Enden der Lichtrohranordnung 22A oder 22B erfolgen. Ob eine Einspeisung von Licht in das Lichtrohr beidseitig oder nur einseitig erfolgt, ist abhängig von der zu beleuchtenden Kabinenlänge und der Intensität der Leuchtkraft.

In Fig. 8 ist eine Mittelgepäckablage 23B gemäß Fig. 7 in einer vergrößerten Perspektivdarstellung ersichtlich. Es ist erkennbar, daß die Lichtrohranordnung 22B auch nebeneinander angeordnete, parallel verlaufende Lichtrohre 8E, 8F und 8E', 8F' aufweisen kann. Vorzugsweise erfolgt bei diesen parallel verlaufenden Lichtrohren eine Einspeisung von je einem Lichtgenerator, die mit einem gemeinsamen Vorschaltgerät in einem gemeinsamen Gehäuse 26B angeordnet sind.

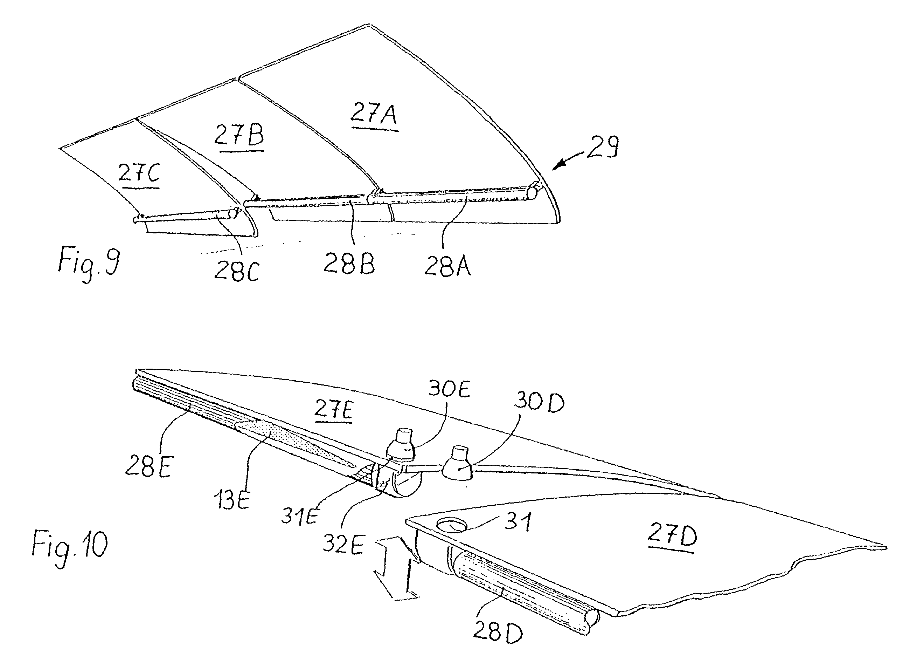

In Fig. 9 sind Deckenverkleidungselemente 27A, 27B, 27C ersichtlich, die in einer Flugzeugpassagierkabine Verwendung finden können. Bestandteil des jeweiligen Deckenverkleidungselementes 27A, 27B, 27C können Lichtrohre 28A, 28B, 28C sein. Die Deckenlichtrohre 28A, 28B, 28C sind am entsprechenden Deckenverkleidungselement 27A, 27B oder 27C so angeordnet, daß sie im montierten Zustand eine nahezu geschlossene Lichtrohranordnung 29 bilden. Eine Verbindung der einzelnen Lichtrohre miteinander ist in der bevorzugten Ausführung nicht notwendig, da bei der fertigmontierten Deckenverkleidung keine oder nur sehr geringe Abstände zwischen den Rohren 28A, 28B, 28C entstehen und das durch die Lichtrohre 28A, 28B, 28C geleitete Licht bei kleineren Lücken zwischen den Rohren trotzdem ausreichend weitergeführt wird. Da nunmehr für die Beleuchtung an den Decken allein die Lichtrohre 28A, 28B, 28C ausreichen, welche von einer fernen Lichtquelle gespeist werden, ist eine Minimierung des Montageaufwandes für die Kabinenbeleuchtung erreicht. Lichtquellen und die dafür notwendigen Energiezufuhrkomponenten sowie Kabel sind bei Montagearbeiten an der Verkleidung nicht mehr zu berücksichtigen. Sie können an Festeinbauten innerhalb der Kabine angeordnet sein. Die Möglichkeiten einer Ortsveränderung der Beleuchtungsmittel mit einem geringen Änderungsaufwand sind somit erheblich verbessert, womit auch eine schnelle und kostengünstige Anpassung an Kundenwünsche bei der Umgestaltung der Passagierkabine realisierbar ist.

Eine weitere Ausgestaltung einer Deckenlichtrohranordnung ist in der Fig. 10 dargestellt. Es sind Deckenlichtrohre 28D und 28E gezeigt, die an Deckenverkleidungselementen 27D und 27E befestigt sind. Die Deckenlichtrohre 28D und 28E sind mit Lichtauskopplungseinrichtungen versehen. Gezeigt ist in der aufgebrochenen Darstellung am Lichtrohr 28E eine Extraktorfolie 13E, die gezielt eine Lichtauskopplung aus dem Lichtrohr 28E in den Kabinenbereich ermöglicht. Da aufgrund der Lichtauskopplung mehr Licht abgestrahlt wird, sind im Interesse gleichmäßiger Lichtverhältnisse mehr Lichtquellen auf einer vorbestimmten Länge vorzusehen als bei der in Fig. 7 und 8 gezeigten Ausführung. In den zuvor beschriebenen Ausführungen sind Lichtquellen in Festeinbauten oder Trennwänden der Kabine angeordnet. Eine solche Anordnung ist nicht möglich, wenn aufgrund der Lichtauskopplung mehr Lichtquellen über eine bestimmte Länge notwendig werden. Dieser Nachteil ist mit der in Fig. 10 gezeigten Ausführung überwunden. Die Einspeisung mit Licht in die Lichtrohre 28D und 28E erfolgt hier über Deckenlichtquellen 30D und 30E, die vorzugsweise an Strukturteilen des Flugzeuges befestigt sind (nicht gezeigt). Die Dekkenverkleidungsteile 27D und 27E sind hierfür jeweils mit einer Aussparung 31D und 31E versehen, durch die die entsprechende Lichtquelle 30D oder 30E durchführbar ist und am Ende des entsprechenden Lichtrohres 28D oder 28E Licht einspeist. Das Licht fällt in der gezeigten Ausführung quer zur Längsachse des Lichtrohres 28D oder 28E ein, wobei vorzugsweise mittels eines Prismenspiegels 32E (ersichtlich am Lichtrohr 28E) der Lichtstrahl in Längsachse des Lichtrohres umgelenkt wird.
Die Vorteile der Trennung zwischen Lichtquelle und Lichtrohr sind einprägsam an der Deckenverkleidung 27D dargestellt. Ein Abnehmen gemäß der Pfeilrichtung und Austauschen der Deckenverkleidung ist unaufwendig möglich, da die Lichtquelle selbst und die dafür notwendigen Energieversorgungsleitungen nicht mit abmontiert werden müssen.

Eine weitere Deckenlichtrohranordnung zeigt die Fig. 11. Ein Deckenverkleidungsteil 33 ist hier als ein Lichtkasten 17 ausgebildet. Eine Lichtröhre 34, die vorteilhaft an einem Strukturbauteil befestigt ist, stellt das notwendige Licht zur Verfügung und kann als eine stabförmige Lichtquelle - beispielsweise als eine Leuchtstoffröhre - ausgebildet sein. Die Lichtröhre 34 kann auch die in Fign. 4 und 5 gezeigte Form der Auskopplung von Licht mittels Radial-Prismenfolie (TRAF) aus einem Lichtrohr verwenden und dabei einen Teil einer gesamten Lichtrohranordnung bilden.
Der mittels Reflexionsfolie 13 geschaffene Extraktor 20 ermöglicht einen gleichmäßig erleuchteten Kasten. Durch eine andere Ausgestaltung der Extraktoranordnung 20 kann die Lichtverteilung innerhalb des Kastens verändert werden, was beispielsweise als Gestaltungs- und Designmittel Anwendung finden kann. Zu berücksichtigen ist dabei, daß in Nähe der Lichtquelle eine hohe Lichtstärke vorhanden ist und aufgrund der Auskopplung von Licht die Lichtstärke abnimmt und damit sich die Fläche der zur Lichtauskopplung notwendigen Reflexionsfolie vergrößern muß.
Neben der Verwendungsmöglichkeit des Lichtkastens als Deckenelement 33 ist es auch denkbar, Wandverkleidungsteile mit dieser Form der Beleuchtung auszustatten. Neben Beleuchtungszwecken ist dabei auch eine dekorative Gestaltung von Wandbereichen möglich.

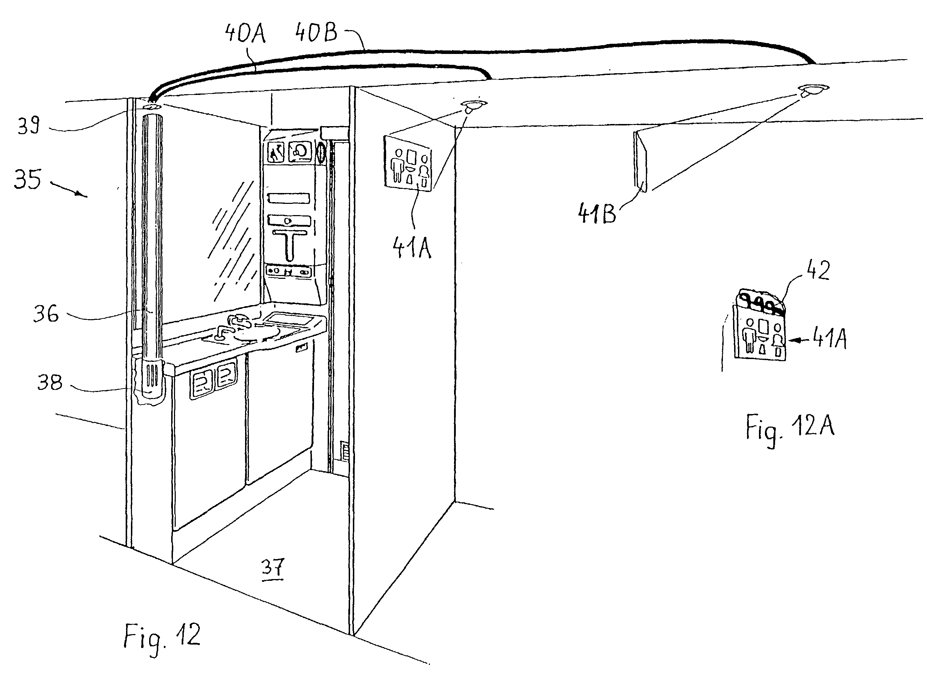

Eine weitere Lichtrohranordnung 35 in Verbindung mit einer Hinweisschildbeleuchtung ist in Fig. 12 gezeigt. Hinweisschilder sollen Ausgänge und Servicebereiche wie Toiletten für den Fluggast auffindbar machen und müssen deshalb von jedem Standort innerhalb der Flugzeugkabine leicht ersichtlich sein. Bei der in Fig. 12 gezeigten Toilettenlichtrohranordnung 35 ist ein Lichtrohr 36 senkrecht innerhalb der Toilettenkabine 37 angeordnet. Eine Lichtquelle 38 ist innerhalb der Festeinbauten der Toilette angeordnet und speist seinen Lichtstrahl in das Lichtrohr 36 ein. Das Lichtrohr 36 kann zusätzlich mittels TRAF-Folie oder Extraktorfolie Licht in die Toilettenkabine 37 abgeben. Es erscheint zweckmäßig, die Toiletteneinrichtung 37 und die zu ihr führenden Hinweisschilder gemeinsam zu beleuchten. Dafür ist am Ende des Lichtrohres 36 eine Einkopplungseinrichtung 39 vorgesehen, die das am Ende des Rohres 36 ankommende Restlicht in Faserbündel 40A, 40B einleitet, welches zu Wegweisern, Positionsmarkierungen und Hinweisschilder 41A, 41B zu deren Beleuchtung führt. Die Einkopplungseinrichtung 39 kann mittels Linsen realisiert werden, die das Licht aus dem Lichtrohr 36 in die Faserbündel 40A, 40B focussiert. Die Auskopplung aus dem Faserbündel 40A, 40B erfolgt in bekannter Art ebenfalls mittels Linsen oder Prismen, wobei ein Anstrahlen der Hinweisschilder bzw. Wegweiser 41A, 41B möglich ist oder - wie in der Einzelheit Fig. 12A gezeigt - über Kantenflächen 42 eine Lichteinspeisung in das jeweilige Schild 41A, 41B erfolgt.

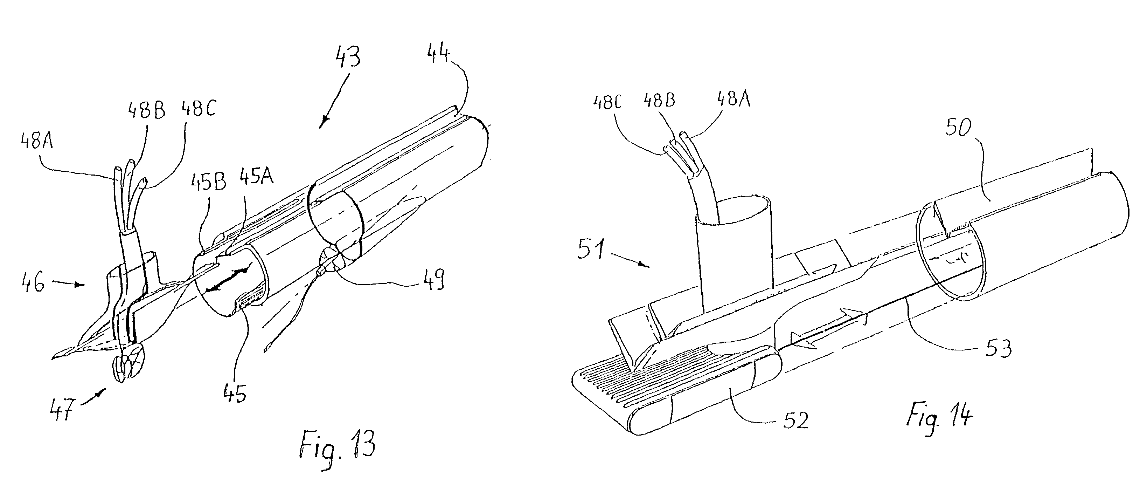

In den Fign. 13 und 14 sind mögliche Ausgestaltungen von Lichtrohranordnungen mit verschiebbaren Lichtauskopplungseinrichtungen dargestellt. Mit diesen Lichtauskopplungseinrichtungen ist es möglich, entsprechend der Sitzreihen beispielsweise Licht für die Leseleuchten aus dem Lichtrohr zu entnehmen. Bei einer Veränderung des Sitzlayouts der Passagierkabine kann eine Positionsveränderung der Leseleuchten ohne einen hohen Montageaufwand erfolgen. Hierzu ist in Fig. 13 eine Ausbildung einer verschiebbaren Lichtauskopplungseinrichtung ersichtlich. In einem speziell ausgebildeten Lichtrohr 43 ist ein Längsschlitz 44 vorgesehen, der durch die in das Lichtrohr 43 eingelegte OLF-Folie 45 mit den überlappenden Folienrändern 45A und 45B geschlossen ist. Ein entlang des Längsschlitzes 44 verschiebbarer Entnahmeschlitten 46 wird entlang des Schlitzes 44 an die zur Lichtentnahme vorgesehenen Stellen bewegt. Der Entnahmeschlitten 46 wird so geführt, daß sich im Bereich seiner Position die überlappenden Folienränder 45A und 45B auseinanderbewegen. Beidseits der Entnahmestelle sind die Folienränder 45A und 45B wieder überlappend zusammengeführt. Am Entnahmeschlitten 46 ist eine in den Innenraum des Lichtrohres 43 hineinragende Vorrichtung zur Lichteinkopplung - eine Linseneinrichtung - 47 in Faseroptikkabel 48A, 488, 48C angeordnet. Mittels bekannter optischer Mittel wie Linsen wird die Einkopplung vom Licht aus dem Lichtrohr 43 in die Faseroptikkabel 48A, 48B, 48C vorgenommen. Über diese Faseroptikkabel können beispielsweise Leseleuchten an den Passagiersitzen innerhalb der Passagierkabine mit Licht versorgt werden, wobei aufgrund der flexiblen Faseroptikkabel auch größere Abstände zwischen Lichtentnahme aus dem Lichtrohr 43 und Position der Leseleuchte überwunden werden kann. Vorteilhaft ist bei einer solchen flexiblen Lichtauskopplung vorzusehen, daß an vorbestimmten Stellen Lichtzuführeinrichtungen 49 am Lichtrohr 43 angeordnet sind. Diese Lichtquellen können bedarfsweise Licht in das Lichtrohr 43 einspeisen, wenn aufgrund der Entnahme von Licht keine ausreichende Beleuchtungsstärke mehr erreichbar ist. Die Lichtzuführeinrichtungen 49 sind vorzugsweise in regelmäßigen Abständen auf der dem Entnahmeschlitz 44 abgewandten Seite angebracht. Das Einkoppeln von Licht kann über Mündungen im Lichtrohr 43 erfolgen, die in möglichst flachem Winkel, also nahezu parallel zur Längsachse des Lichtrohres 43 angeordnet sind. Durch die Annäherung der Mündungs- und Lichtstrahlachse an die Verlaufsrichtung des Lichtrohres 43 ist gewährleistet, daß die Auftrittswinkel des immitierten Lichts auf die OLF-Folie im Inneren des Lichtrohres 43 stets so flach bleiben, daß eine Totalreflexion gewährleistet ist.

In Fig. 14 ist eine in einem Luftkanal 50 verschiebbare Lichtgeneratoreinrichtung 51 ersichtlich. Bekannt sind beispielsweise für die Versorgung von Passagierversorgungseinheiten in Passagierkabinen angeordnete Luftleitungen, die zur Entnahme von Luft verschiebbare Entnahmestutzen verwenden. Vorgeschlagen wird mit der in Fig. 14 gezeigten Ausführung eine Möglichkeit der Kopplung von einem geschlitzten Luftkanal 50 und einer Lichtzuführung für Leselampen an den Passagiersitzen. Die wärmeerzeugenden Lichtquellen sind aus der Passagierkabine entfernt und liegen innerhalb des Luftkanales 50, mit dem eine zwangsläufige Wärmeabführung erreicht ist. Eine solche Luftkanallichtquelle 52 ist in ihren Abmessungen den Innenabmessungen des Luftkanales 50 angepaßt. Die Lichtquelle 52 ist Teil einer Lichtgeneratoreinrichtung 51, die weiterhin einen Versorgungsstutzen aufweist, wobei über eine Einkopplungsvorrichtung das entnommene Licht in Faseroptikkabel 48A, 48B, 48C eingespeist wird. Die Lichtgeneratoreinrichtung 51 und die damit verbundene Luftkanallichtquelle 52 ist entlang des Längsschlitzes des Luftkanales 50 verschiebbar, was beispielsweise eine flexible Entnahme von Licht für die Leseleuchten ermöglicht. Eine Energieversorgung der Lichtquelle 52 ist mittels einer Schleifkontaktschiene 53 erreicht, die entlang des Luftkanals 50 verlegt ist.

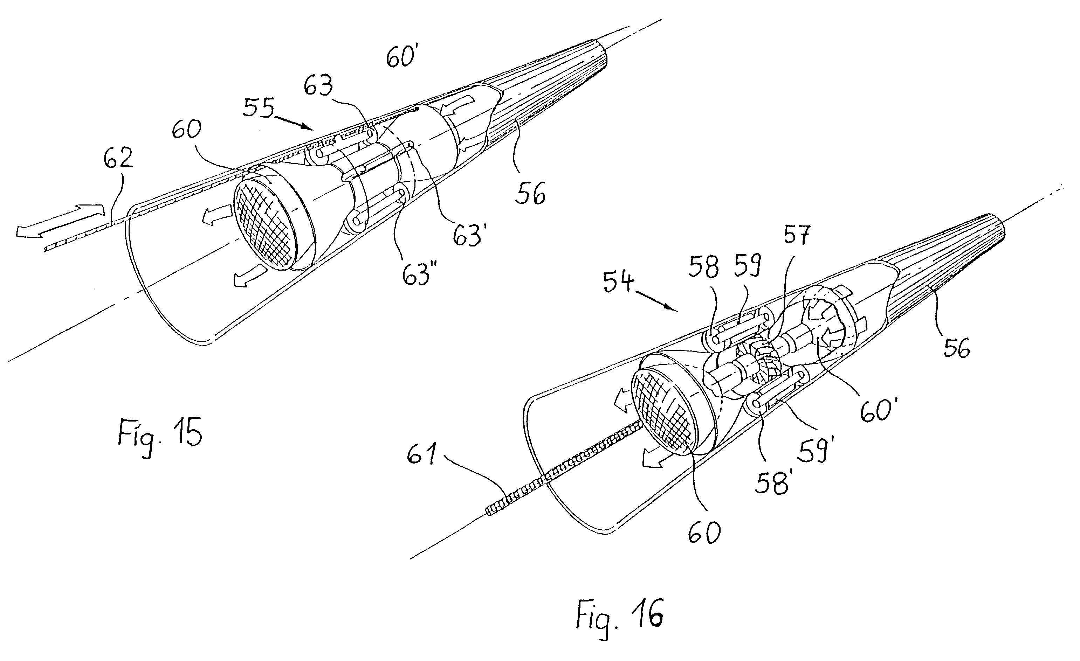

In den Fign. 15 und 16 sind mögliche Ausgestaltungen von Lichtrohranordnungen mit verschiebbaren Lichtgeneratoren gezeigt. Um Lichtverhältnisse innerhalb von Teilabschnitten der Kabine bzw. Teilabschnitten von Lichtrohranordnungen steuerbar zu gestalten, können verschiebbare Lichtgeneratoren innerhalb der Lichtrohre vorgesehen sein. Insbesondere bei den in Fign. 1, 7, 8 und 9 dargestellten Ausbildungen von Lichtrohranordnungen können in einigen Fällen aufgrund längerer zu beleuchtender Kabinenabschnitte nicht ausreichend Lichtgeneratoren in Festeinbauten des Flugzeuges vorgesehen sein oder die Lichtverhältnisse sind innerhalb des jeweiligen Kabinenabschnittes einheitlich und können nur ganzheitlich geändert werden. Sollen nun die Lichtverhältnisse innerhalb von Teilabschnitten, sogenannte Zoneneinteilung, unabhängig voneinander steuerbar sein oder sogar die Zonen unterschiedlichen Lichts verschoben werden, so kann eine selbstfahrende Lichtquelle 54 oder eine mittels Seilzug verschiebbare Lichtquelle 55 innerhalb der Lichtrohranordnung zur Anwendung kommen. Für eine Lichtrohranordnung können innerhalb eines zusammenhängenden Leiterstranges auch mehrere verschiebbare Lichtquellen 54 oder 55 zur Anwendung kommen. Durch das Bewegen der selbstfahrenden Lichtquellen ändert sich mit dem Abstand zwischen diesen die Beleuchtungsstärke des entsprechenden Lichtrohres. Je näher der Abstand der verschiebbaren Lichtquellen 54 oder 55 ist, desto mehr Licht kann über das Lichtrohr abgestrahlt werden. Je weiter die Lichtquellen 54 oder 55 auseinanderliegen, desto schwächer ist die Beleuchtungsstärke. Um bei unterschiedlichen Abständen zwischen den Lichtquellen 54 oder 55 trotzdem eine gleichmäßige Beleuchtung zu erreichen, ist über eine Dimmungseinstellung an der entsprechenden Lichtquelle eine Kompensation dieser Unterschiede möglich.
Denkbar ist es auch, eine verschiebbare Spiegeleinrichtung innerhalb des Lichtrohres anzuordnen. In einem solchen Fall sind die Lichtquellen am Ende des Lichtrohres vorzusehen.

In Fig. 15 ist die verschiebbare Lichtquelle 55 innerhalb des Lichtrohres 56 gezeigt. Die Lichtquelle 55 ist mit einer beidseitigen Abstrahlung versehen, was mit zwei Gasentladungslampen 60 und 60' realisiert wird. Vorzugsweise wird Kühlluft für die Gasentladungslampen 60 und 60' durch ein Gebläse 57 (ersichtlich in Fig. 16) erzeugt, wobei der Gebläseluftstrom für eine ausreichende Wärmeabfuhr an den Lichtquellen 60 und 60' sorgt. Das Gebläse 57 ist vorteilhaft zwischen den beiden Gasentladungslampen 60 und 60' angeordnet. Die Enden des Lichtrohres 56 können vorteilhaft zu Kühlungszwecken offen ausgeführt werden. Denkbar ist es auch, Kühlluft direkt durch das Lichtrohr 56 zu führen. Die Bewegung der Lichtquelle 55 ist mittels eines Seilzuges 62 realisiert. Die Lichtquelle 55, die mit radial angeordneten Laufrädern 63, 63' und 63" versehen ist, kann mittels eines Seiles oder eines Kabels entlang des Lichtrohres 56 bewegt werden. Eine Energieversorgung der Lichtquelle kann beispielsweise über das Zugkabel 62 erfolgen.
In Fig. 16 ist eine weitere Ausbildung einer verschiebbaren Lichtquelle innerhalb des Lichtrohres 56 gezeigt. Die Selbstfahrlichtquelle 54 ist mit zwei Gasentladungslampen 60 und 60' realisiert. Die Kühlung der Gasentladungslampen erfolgt mittels des Gebläses 57, das durch die aufgebrochene Darstellung in der Fig. ersichtlich ist. Das Gebläse 57 ist vorteilhaft zwischen den beiden Gasentladungslampen 60 und 60' angeordnet. Die Bewegung der Selbstfahrlichtquelle 54 erfolgt mittels radial angeordneter Antriebsräder 58, 58'. Diese Antriebsräder 58, 58' sind vorzugsweise mit einem Positionsmotor 59 und 59' versehen. Am Lichtrohr 56, vorzugsweise an der vom Passagier abgewandten Seite, sind Schleifkontakte für die Energieversorgung und Magnetraster für die Positionserkennung vorgesehen. Dafür ist eine Versorgungs- und Positionsschiene 61 mit Magnetraster innerhalb des Rohres 56 angeordnet. Das Auffinden einer an der Flugbegleiter-Station vorgewählten Position ist somit mittels des Magnetstreifens der Positionsschiene 61 möglich.

## Patentansprüche

1. Passagierkabine mit Beleuchtungssystem, insbesondere für Passagierflugzeuge, wobei ausgehend von mindestens einer zentralen Lichtquelle (9; 26; 30) Lichtverteilleitungen (4A, 4B, 4C, 4D; 5A, 5B, 5C, 5D) in der Passagierkabine (2; 3) angeordnet sind und die Lichtverteilleitungen (4A, 4B, 4C, 40; 5A, 5B, 5C, 5D) aus mit Längs-Prismen (10) versehenen Hohlleitern (8; 8A, 8B, 8C, 8D, 8E, 8F, 8G) - genannt Lichtrohre - bestehen, wobei mehrere in Reihe geschaltene Lichtrohre (8A -8G; 28A - 28E) eine Lichtrohranordnung (22A, 22B; 29) bilden, **dadurch gekennzeichnet, dass** innerhalb der Lichtrohre (8A -8G; 28A - 28E) ein Großteil des Lichts reflektiert und weitertransportiert wird und ein kleinerer Teil des Lichts allseitig abstrahlend eine Allgemeinbeleuchtung der Passagierkabine bildet.

2. Beleuchtungssystem nach Anspruch 1,
**dadurch gekennzeichnet, dass**
die Lichtrohranordnung eine Deckenlichtrohranordnung (29) bildet, wobei mehrere Lichtrohre (28A, 28B, 28C) an Deckenverkleidungsteilen (27A, 28B, 27C) befestigt sind und in Reihe geschaltet einen gemeinsamen Lichtrohrstrang bilden.

3. Beleuchtungssystem nach Anspruch 2,
**dadurch gekennzeichnet, dass**
an mindestens einem Lichtrohrende (28A, 28C) der Deckenlichtanordnung (29) eine, an einem Einbauteil (6) befestigte Lichtquelle angeordnet ist.

4. Beleuchtungssystem nach einem der Ansprüche 1 bis 3,
**dadurch gekennzeichnet, dass**
an den Deckenlichtrohren (28D, 28E) Deckenlichtquellen (30D, 30E) angeordnet sind.

5. Beleuchtungssystem nach Anspruch 4,
**dadurch gekennzeichnet, dass**
die Deckenlichtquellen (30D, 30E) durch Aussparungen (31D, 31E) von Dekenverkleidungselementen (27D, 27E) senkrecht in das Deckenlichtrohr (28D, 28E) einführbar sind und mittels Prismenspiegel (32E) der Lichtstrahl von der Deckenlichtquelle (30D, 30E) umlenkbar ist.

6. Beleuchtungssystem nach einem der Ansprüche 1 bis 5,
**dadurch gekennzeichnet, dass**
die zentrale Lichtquelle aus stabförmigen Lichtrohren (8A, 8B) besteht und zumindest eine der Lichtverteilleitungen aus einem Lichtkasten (17) besteht, der seitlich an einem der stabförmigen Lichtrohre angeordnet ist und der Lichtkasten (17) als Bestandteil der Lichtrohranordnung (33) vorgesehen ist, wobei zumindest eine Deckenplatte (19) des Lichtkastens (17) mit einer Extraktorfolie (20) versehen ist.

7. Beleuchtungssystem nach einem der Ansprüche 1 bis 4,
**dadurch gekennzeichnet, dass**
die Lichtrohranordnung (22A; 22B) zumindest an einem Ende mit einer Lichtquelle (26A; 26B) verbunden ist, wobei die Lichtquelle in axialer Richtung zum Lichtrohr angeordnet ist.

8. Beleuchtungssystem nach Anspruch 7,
**dadurch gekennzeichnet, dass**
die Lichtquellen (26A; 26B) an Festeinbauten (24D; 6; 25) der Kabine angeordnet sind.

9. Beleuchtungssystem nach einem der Ansprüche 1 bis 8,
**dadurch gekennzeichnet, dass**
ausgehend von Hohlleiterlichtrohren (36)) über eine Einkoppeleinrichtung (39) Lichtleitfaserbündel (40A, 40B) zur punktweisen Beleuchtung ankoppelbar sind.

10. Beleuchtungssystem nach einem der Ansprüche 1 bis 9,
**dadurch gekennzeichnet, dass**
in einem Längsschlitz (44) eines geschlitzten Lichtrohres (43) ein verschiebbarer Lichtentnahmeschlitten (46) geführt ist, wobei in das Lichtrohr (43) eingelegte OLF-Folie (45) mit ihren Rändern (45A, 45B) überlappend ausgeführt ist, die sich beim Entlangfahren des Entnahmeschlittens (46) auseinanderspreizt.

11. Beleuchtungssystem nach Anspruch 10,
**dadurch gekennzeichnet, dass**
eine Linseneinrichtung (47) am Lichtentnahmeschlitten (46) angeordnet ist, die Faseroptikkabel (48A, 48B, 48C) mit Licht versorgt.

12. Beleuchtungssystem nach einem der Ansprüche 1 bis 11,
**dadurch gekennzeichnet, dass**
in einem Luftkanal (50) eine verschiebbare Lichtgeneratoreinrichtung (51) angeordnet ist.

13. Beleuchtungssystem nach Anspruch 12,
**dadurch gekennzeichnet, dass**
die Lichtgeneratoreinrichtung (51) innerhalb des Luftkanals (50) eine Luftkanallichtquelle (52) aufweist, die Faseroptikkabel (48A, 48B, 48C) mit Licht versorgt.

14. Beleuchtungssystem nach einem der Ansprüche 1 bis 13,
**dadurch gekennzeichnet, dass**
innerhalb eines Lichtrohres (56) oder einer Lichtrohranordnung mindestens ein verschiebbarer Lichtgenerator (54; 55) angeordnet ist.

15. Beleuchtungssystem nach einem der Ansprüche 1 bis 14,
**dadurch gekennzeichnet, dass**
innerhalb eines Lichtrohres (56) oder einer Lichtrohranordnung mindestens eine verschiebbare Spiegeleinrichtung zur Lichtumlenkung angeordnet ist.

16. Beleuchtungssystem nach einem der Ansprüche 14 oder 15,
**dadurch gekennzeichnet, dass**
die Bewegung des verschiebbaren Lichtgenerators (55) oder der Spiegeleinrichtung mittels eines Seilzuges (62) realisierbar ist.

17. Beleuchtungssystem nach einem der Ansprüche 14 oder 15,
**dadurch gekennzeichnet, dass**
die Bewegung des verschiebbaren Lichtgenerators (54) oder der Spiegeleinrichtung als Selbstfahrlichtgenerator mittels Antriebsräder (58, 58') mit Positionsmotor (59, 59') realisierbar ist.

18. Beleuchtungssystem nach Anspruch 14, **dadurch gekennzeichnet, dass** der verschiebbare Lichtgenerator (54; 55) beidseitig abstrahlende Lichtquellen (60, 60') aufweist.

19. Beleuchtungssystem nach Anspruch 14,
**dadurch gekennzeichnet, dass**
der verschiebbare Lichtgenerator (54; 55) ein Gebläse (57) zur Kühlung der Lichtquellen (60, 60') aufweist.

20. Beleuchtungssystem nach einem der Ansprüche 1 bis 19,
**dadurch gekennzeichnet, daß**
innerhalb eines Lichtrohres (56) oder einer Lichtrohranordnung mindestens ein verschiebbarer Lichtgenerator (54; 55) angeordnet ist.

21. Beleuchtungssystem nach einem der Ansprüche 1 bis 19,
**dadurch gekennzeichnet, daß**
innerhalb eines Lichtrohres (56) oder einer Lichtrohranordnung mindestens eine verschiebbare Spiegeleinrichtung zur Lichtumlenkung angeordnet ist.

22. Beleuchtungssystem nach einem der Ansprüche 20 oder 21,
**dadurch gekennzeichnet, daß**
die Bewegung des verschiebbaren Lichtgenerators (55) oder der Spiegeleinrichtung mittels eines Seilzuges (62) realisierbar ist.

23. Beleuchtungssystem nach einem der Ansprüche 20 oder 21,
**dadurch gekennzeichnet, daß**
die Bewegung des verschiebbaren Lichtgenerators (54) oder der Spiegeleinrichtung als Selbstfahrlichtgenerator mittels Antriebsräder (58, 58') mit Positionsmotor (59, 59') realisierbar ist.

24. Beleuchtungssystem nach Anspruch 20, **dadurch gekennzeichnet, daß** der verschiebbare Lichtgenerator (54; 55) beidseitig abstrahlende Lichtquellen (60, 60') aufweist.

25. Beleuchtungssystem nach Anspruch 20,
**dadurch gekennzeichnet, daß**
der verschiebbare Lichtgenerator (54; 55) ein Gebläse (57) zur Kühlung der Lichtquellen (60, 60') aufweist.

## Claims

1. Passenger cabin with a lighting system, in particular for passenger aircraft, wherein light distribution lines (4A, 4B, 4C, 4D; 5A, 5B, 5C, 5D) are arranged starting from at least one central light source (9; 26; 30) in the passenger cabin (2; 3), and the light distribution lines (4A, 4B, 4C, 4D; 5A, 5B, 5C, 5D) consist of hollow guides (8; 8A, 8B, 8C, 8D, 8E, 8F, 8G) - referred to as light tubes - which are provided with longitudinal prisms,
wherein a plurality of light tubes (8A - 8G; 28A - 28E) connected in series form a light-tube arrangement (22A, 22B; 29), **characterised in that** a majority of the light is reflected and transported further inside the light tubes (8A - 8G; 28A - 28E) and a smaller fraction of the light provides normal lighting of the passenger cabin by being radiated on all sides.

2. Lighting system according to Claim 1,
**characterised in that**
the light-tube arrangement forms a ceiling light-tube arrangement (29), wherein a plurality of light tubes (28A, 28B, 28C) are fastened to ceiling fitments (27A, 27B, 27C) and, connected in series, form a common light-tube branch.

3. Lighting system according to Claim 2,
**characterised in that**
a light source fastened to a fixture (6) is arranged on at least one light-tube end (28A, 28C) of the ceiling light arrangement (29).

4. Lighting system according to one of Claims 1 to 3,
**characterised in that**
ceiling light sources (30D, 30E) are arranged on the ceiling light tubes (28D, 28E).

5. Lighting system according to Claim 4,
**characterised in that**
the ceiling light sources (30D, 30E) can be inserted perpendicularly into the ceiling light tube (28D, 28E) through holes (31D, 31E) of ceiling fitment elements (27D, 27E), and the light beam from the ceiling light source (30D, 30E) can be deviated by means of prism mirrors (32E).

6. Lighting system according to one of Claims 1 to 5,
**characterised in that**
the central light source consists of rod-shaped light tubes (8A, 8B), and at least one of the light distribution lines consists of a light compartment (17) which is arranged laterally on one of the rod-shaped light tubes, and the light compartment (17) is provided as a component of the light-tube arrangement (33), wherein at least one cover plate (19) of the light compartment (17) is provided with an extractor film (20).

7. Lighting system according to one of Claims 1 to 4,
**characterised in that**
the light-tube arrangement (22A; 22B) is connected at least on one end to a light source (26A; 26B), wherein the light source is arranged in an axial direction with respect to the light tube.

8. Lighting system according to Claim 7,
**characterised in that**
the light sources (26A; 26B) are arranged on solid fixtures (24D; 6; 25) of the cabin.

9. Lighting system according to one of Claims 1 to 8,
**characterised in that**
optical fibre bundles (40A, 40B) for point-wise lighting can be couple starting from hollow-guide light tubes (36) via an input coupling device (39).

10. Lighting system according to one of Claims 1 to 9,
**characterised in that**
a displaceable light extraction slider (46) is guided in a longitudinal slot (44) of a slotted light tube (43),
wherein an OLF film (45) placed into the light tube (43) is configured with its edges (45A, 45B) overlapping, these being spread apart from one another when the extraction slider (46) is moved along.

11. Lighting system according to Claim 10,
**characterised in that**
a lens device (47) is arranged on the light extraction slider (46) and supplies light to fibre-optic cables (48A, 48B, 48C).

12. Lighting system according to one of Claims 1 to 11,
**characterised in that**
a displaceable light-generator device (51) is arranged in an air channel (50).

13. Lighting system according to Claim 12,
**characterised in that**
the light-generator device (51) has, inside the air channel (50), an air-channel light source (52) which supplies light to fibre-optic cables (48A, 48B, 48C).

14. Lighting system according to one of Claims 1 to 13,
**characterised in that**
at least one displaceable light generator (54; 55) is arranged inside a light tube (56) or a light-tube arrangement.

15. Lighting system according to one of Claims 1 to 14,
**characterised in that**
at least one displaceable mirror device for light deviation is arranged inside a light tube (56) or a light-tube arrangement.

16. Lighting system according to one of Claims 14 or 15,
**characterised in that**
the movement of the displaceable light generator (55) or of the mirror device can be carried out by means of a cord pull (62).

17. Lighting system according to one of Claims 14 or 15,
**characterised in that**
the movement of the displaceable light generator (54) or of the mirror device light generator as a self-driven light generator can be carried out by means of drive wheels (58, 58') with a position motor (59, 59').

18. Lighting system according to Claim 14,
**characterised in that**
the displaceable light generator (54; 55) has light sources (60, 60') radiating on both sides.

19. Lighting system according to Claim 14,
**characterised in that**
the displaceable light generator (54; 55) has a fan (57) for cooling the light sources (60, 60').

20. Lighting system according to one of Claims 1 to 19,
**characterised in that**
at least one displaceable light generator (54; 55) is arranged inside a light tube (56) or a light-tube arrangement.

21. Lighting system according to one of Claims 1 to 19,
**characterised in that**
at least one displaceable mirror device for light deviation is arranged inside a light tube (56) or a light-tube arrangement.

22. Lighting system according to one of Claims 20 or 21,
**characterised in that**
the movement of the displaceable light generator (55) or of the mirror device can be carried out by means of a cord pull (62).

23. Lighting system according to one of Claims 20 or 21,
**characterised in that**
the movement of the displaceable light generator (54) or of the mirror device as a self-driven light generator can be carried out by means of drive wheels (58, 58') with a position motor (59, 59').

24. Lighting system according to Claim 20,
**characterised in that**
the displaceable light generator (54; 55) has light sources (60, 60') radiating on both sides.

25. Lighting system according to Claim 20,
**characterised in that**
the displaceable light generator (54; 55) has a fan (57) for cooling the light sources (60, 60').

## Revendications

1. Cabine de passagers avec système d'éclairage (2) , plus particulièrement pour avions de passagers, des conduites de distribution de lumière (4A, 4B, 4C, 4D ; 5A, 5B, 5C, 5D) partant d'au moins une source de lumière centrale (9 ; 26 ; 30) étant disposées dans la cabine de passagers (2 ; 3) et constituées de guides d'ondes (8 ; 8A, 8B, 8C, 8D, 8^{E}, 8F, 8G) à plusieurs tubes lumineux connectés en série (8A-8G ; 28A-28E) formant un système de tubes lumineux (22A, 22B ; 29), et **caractérisée en ce que**, à l'intérieur des tubes lumineux (8A-8G ; 28A-28^{E}), la majeure partie de la lumière est réfléchie puis transportée , une plus petite partie de la lumière rayonnant de tous les côtés et fournissant l'éclairage principal de la cabine de passagers.

2. Système d'éclairage conforme à la revendication 1, **caractérisé en ce que** le système de tubes lumineux forme un éclairage zénithal (29),plusieurs tubes lumineux (28A, 28B, 28C) étant fixés à des revêtements de plafond (27A, 28B, 27C) et reliés en série, formant un cordon de tubes lumineux.

3. Système d'éclairage conforme à la revendication 2, **caractérisé en ce que** une source de lumière fixée contre un élément encastré (6) a été fixée à au moins une extrémité de tube de lumière (28A, 28C) du système d'éclairage zénithal (29).

4. Système d'éclairage conforme à une des revendications 1 à 3, **caractérisé en ce que** des sources d'éclairage zénithal (30D, 30E) ont été disposées contre les tubes d'éclairage zénithal (28D, 28E).

5. Système d'éclairage conforme à la revendication 4, **caractérisé en ce que** les sources d'éclairage peuvent être insérées perpendiculairement dans le tube d'éclairage zénithal (28D, 28E) par le biais d'évidements (31D, 31E) dans les éléments de recouvrement de plafond (27D, 27E) et **en ce que** le rayon lumineux de la source d'éclairage zénithal (30D, 30E) peut être dévié à l'aide de miroirs à prismes (32E).

6. Système d'éclairage conforme à une des revendications 1 à 5, **caractérisé en ce que** la source lumineuse centrale est constituée de tubes de lumière (8A, 8B) en forme de barres, **en ce que** au moins une des conduites de distribution de lumière est constituée d'une boîte à lumière (17) disposée latéralement contre un des tubes de lumière en forme de barres et **en ce que** ladite boîte à lumière (17) fait partie intégrante du système de tubes de lumière (33), au moins un panneau de recouvrement (19) de la boîte à lumière (17) étant pourvu d'une pellicule extractrice (20).

7. Système d'éclairage conforme à une des revendications 1 à 4, **caractérisé en ce que** le système de tubes de lumière (22A ; 22B) est relié à au moins une des extrémités à une source de lumière (26A ; 26B), ladite source de lumière étant disposée dans le sens axial par rapport au tube de lumière.

8. Système d'éclairage conforme à la revendication 7, **caractérisé en ce que** les sources de lumière (26A ; 26B) ont été disposées contre des habillages rigides (24D ; 6 ; 25) de la cabine.

9. Système d'éclairage conforme à une des revendications 1 à 8, **caractérisé en ce que** des faisceaux de fibres optiques (40A, 40B) peuvent être reliés via un système de couplage (39) à partir de tubes de lumière à guide d'ondes (36), en vue d'un éclairage ponctuel.

10. Système d'éclairage conforme à une des revendications 1 à 9, **caractérisé en ce que** un chariot (46) coulissant destiné à capter la lumière est guidé dans une fente longitudinale (44) d'un tube de lumière (43) entaillé, les bords (45A, 45B) de la pellicule $$OLF$$ (45) insérée dans le tube de lumière (43) se chevauchant et la pellicule s'étalant lors du guidage du chariot de captage de la lumière (46).

11. Système d'éclairage conforme à la revendication 10, **caractérisé en ce que** un système de lentilles (47) approvisionnant le câble à fibres optiques (48A, 48B, 48C) en lumière est disposé contre le chariot de captage de la lumière (46).

12. Système d'éclairage conforme à une des revendications 1 à 11, **caractérisé en ce que** un dispositif de production de lumière (51) coulissant est. disposé dans une conduite d'air.

13. Système d'éclairage conforme à la revendication 12, **caractérisé en ce que** le dispositif de production de lumière (51) situé à l'intérieur de la conduite d'air (50) est doté d'une source de lumière approvisionnant le câble à fibres optiques (48A, 48B, 48C) en lumière.

14. Système d'éclairage conforme à une des revendications 1 à 13, **caractérisé en ce que** au moins un générateur de lumière (54 ; 55) coulissant a été disposé à l'intérieur d'un tube de lumière (56) ou d'un système de tubes de lumière.

15. Système d'éclairage conforme à une des revendications 1 à 14, **caractérisé en ce que** au moins un dispositif de miroirs coulissant a été disposé à l'intérieur d'un tube de lumière (56) ou d'un système de tubes de lumière afin de dévier ladite lumière.

16. Système d'éclairage conforme à une des revendications 14 ou 15, **caractérisé en ce que** le générateur de lumière (55) coulissant ou le dispositif de miroirs peut être déplacé à l'aide d'une transmission par câble (62).

17. Système d'éclairage conforme à une des revendications 14 ou 15, **caractérisé en ce que** le générateur de lumière (54) coulissant ou le dispositif de miroirs peut être déplacé comme générateur de lumière automoteur à l'aide de roues motrices (58, 58') avec moteur de position (59, 59').

18. Système d'éclairage conforme à la revendication 14, **caractérisé en ce que** le générateur de lumière (54, 55) coulissant est équipé de sources de lumière (60, 60') rayonnant de part et d'autre.

19. Système d'éclairage conforme à la revendication 14, **caractérisé en ce que** le générateur de lumière (54, 55) coulissant présente une soufflerie (57) destinée à refroidir les sources de lumière (60, 60').

20. Système d'éclairage conforme à une des revendications 1 à 19, **caractérisé en ce que** au moins un générateur de lumière (54, 55) coulissant a été disposé à l'intérieur d'un tube de lumière (56) ou d'un système de tubes de lumière.

21. Système d'éclairage conforme à une des revendications 1 à 19, **caractérisé en ce que** au moins un dispositif de miroirs coulissant a été disposé à l'intérieur d'un tube de lumière (56) ou d'un système de tubes de lumière afin de dévier ladite lumière.

22. Système d'éclairage conforme à une des revendications 20 ou 21, **caractérisé en ce que** le générateur de lumière (55) coulissant ou le dispositif de miroirs peut être déplacé à l'aide d'une transmission par câble (62).

23. Système d'éclairage conforme à une des revendications 20 ou 21, **caractérisé en ce que** le générateur de lumière (54) coulissant ou le dispositif de miroirs peut être déplacé comme générateur de lumière automoteur à l'aide de roues motrices (58, 58') avec moteur de position (59, 59').

24. Système d'éclairage conforme à la revendication 20, **caractérisé en ce que** le générateur de lumière (54, 55) coulissant est équipé de sources de lumière (60, 60') rayonnant de part et d'autre.

25. Système d'éclairage conforme à la revendication 20, **caractérisé en ce que** le générateur de lumière (54, 55) coulissant présente une soufflerie (57) destinée à refroidir les sources de lumière (60, 60').
